# EUROPÄISCHE PATENTSCHRIFT

(11) **EP 2 097 261 B1**
(45) Veröffentlichungstag und Bekanntmachung des Hinweises auf die Patenterteilung: **19.01.2011**
(21) Anmeldenummer: 07818538.6
(22) Anmeldetag: 28.09.2007
(51) Int. Cl.: B41F 5/18, B41F 5/24, B41F 13/14, B41F 33/00, G01B 11/24, B41F 5/20, B41F 7/18, B41F 9/04, B41F 13/02, B41F 13/12, B41F 13/34, B41F 13/38, B41F 31/30, B41C 1/10

(54) **ROTATIONSDRUCKMASCHINE UND VERFAHREN ZUM EINSTELLEN EINER WALZE DERSELBEN**
ROTARY PRINTING PRESS AND METHOD FOR ADJUSTING A CYLINDER THEREOF
PRESSE ROTATIVE ET PROCÉDÉ POUR AJUSTER UN DE SES CYLINDRES

(30) Priorität: 23.10.2006 EP 06022135; 19.12.2006 DE 102006060464; 30.03.2007 DE 202007004717 U
(43) Veröffentlichungstag der Anmeldung: 09.09.2009
(73) Patentinhaber: Fischer & Krecke GmbH, 33609 Bielefeld (DE)
(72) Erfinder: WHITELAW, Gordon, Bilgola NSW 2107 (AU); GRAUTHOFF, Georg, 1025 St.-Sulpice (CH); KÜCKELMANN, Andreas, 49479 Ibbenbüren (DE)
(74) Vertreter: Wiebusch, Manfred
(86) Internationale Anmeldenummer: PCT/EP2007/008456
(87) Internationale Veröffentlichungsnummer: WO 2008/049500

(56) Entgegenhaltungen:
- EP-A- 0 114 957
- EP-A- 0 393 365
- EP-A- 1 048 461
- EP-A- 1 249 346
- DE-A1- 10 357 430
- DE-A1- 19 527 199
- DE-A1- 19 755 487
- DE-C1- 3 136 703
- JP-A- 2006 256 175
- JP-A- 2006 256 176
- US-A- 4 437 403
- US-A1- 2004 114 125
- US-A1- 2005 247 219

## Beschreibung

Die Erfindung betrifft eine Abtastvorrichtung zur Messung eines Oberflächenprofils eines rotierenden Zylinders, mit einer beweglich gelagerten, am Zylinder abrollenden Tastrolle.

Eine solche Abtastvorrichtung ist aus JP-A-2006256175 bekannt.

Die Erfindung findet insbesondere Anwendung bei einem Verfahren zum Einstellen einer Walze in einer Rotationsdruckmaschine, wie es in EP 1 916 102 B1 beschrieben wird.

Die einzustellende Walze kann z.B. ein Druckzylinder oder eine Druckzylinderhülse (Sleeve) in einer Flexodruckmaschine, einer Tiefdruckmaschine oder einer Offsetdruckmaschine sein, oder etwa eine Rasterwalze in einer Flexodruckmaschine. Ein Parameter, der für eine solche Walze eingestellt werden muß, kann die Kraft oder der Druck sein, mit der oder mit dem die Umfangsfläche der Walze radial gegen ein anderes Bauteil der Druckmaschine angestellt wird, z.B. gegen einen Gegendruckzylinder, wenn die einzustellende Walze ein Druckzylinder ist, oder gegen einen Druckzylinder, wenn die einzustellende Walze eine Rasterwalze ist. Dieser Druckparameter kann für die beiden entgegengesetzten Seiten der Druckmaschine, die als Antriebsseite und Bedienungsseite bezeichnet werden, individuell definiert sein. Zumindest im Fall eines Druckzylinders werden die einzustellenden Parameter typischerweise auch das Längsregister und das Seitenregister umfassen.

In einer herkömmlichen Druckmaschine erfolgt die Einstellung dieser Parameter elektronisch durch geeignete Ansteuerung von Autoren oder Servomotoren. Nichtsdestoweniger ist noch ein menschlicher Eingriff erforderlich, um das Resultat der Einstelloperation durch visuelle Inspektion des gedruckten Bildes zu bewerten und um Befehle zur Korrektur der Einstellungen einzugeben. Die Einstelloperation erfolgt gewöhnlich in einer Andruckphase, wenn eine neue Walze oder ein neuer Walzensatz in der Druckmaschine montiert worden ist und die Maschine gestartet wurde, um Bilder auf eine Bedruckstoffbahn zu drucken. Folglich wird eine beträchtliche Menge an Makulatur produziert, bevor die Einstelloperation abgeschlossen ist und eine zufriedenstellende Qualität der gedruckten Bilder erreicht ist. In einer modernen Hochgeschwindigkeits-Druckmaschine, kann die Menge der in dieser Weise in dem Einstellprozeß nach dem Prinzip von Versuch und Irrtum produzierten Makulatur sehr groß werden und etwa 600 m oder mehr je Drucklauf betragen. Dies bedeutet nicht nur eine Verschwendung von Bedruckstoffmaterial, sondern auch einen Zeitverlust und damit eine beträchtliche Verminderung der Produktivität der Druckmaschine, insbesondere wenn die mit einem gegebenen Walzensatz ausgeführten Druckläufe verhältnismäßig kurz sind.

Es sind verschiedene Ansätze verfolgt worden, die Einstellung oder Anstellung der Walzen einer Druckmaschine hinsichtlich Längsregister, Seitenregister und Druck zu beschleunigen und zu automatisierten. Zum Beispiel beschreibt EP 1 249 346 B1 ein System und Verfahren zur automatischen Druckstellung, bei dem die visuelle Inspektion der gedruckten Bilder mit dem menschlichen Auge durch eine elektronische Bilderkennung und eine automatische Regelung der Druckeinstellungen auf der Grundlage dieser Bilderkennung ersetzt wird. Dennoch erfordert die Einstellprozedur eine beträchtliche Zeit und führt damit zur Produktion von Makulatur.

Das in EP 1 916 102 B1 angegebene Verfahren erlaubt es, die Produktion von Makulatur und die für den Einstellprozeß in der Andruckphase eines Drucklaufes benötigte Zeit zu eliminieren oder zumindest zu verringern.

Erreicht wird dies durch ein Verfahren zum Einstellen einer Walze in einer Rotationsdruckmaschine, das die folgenden Schritte aufweist:
a) Montieren der Walze in einem Vorbereitungsgestell, in dem die Walze drehbar gelagert ist,
b) Abtasten der Umfangsfläche der Walze, um so eine Topographie der Walzenoberfläche zu detektieren,
c) Ableiten von Einstelldaten für die Einstellung der Walze aus der Topographie und Speichern der Einstelldaten,
d) Montieren der Walze in der Druckmaschine und
e) Einstellen der Walze anhand der Einstelldaten.

Somit wird gemäß der Erfindung der auf dem Prinzip von Versuch und Irrtum beruhende Einstellprozeß durch eine direkte Steuerung der Einstellparameter auf der Grundlage von Einstelldaten ersetzt, die vorab in einem Vorbereitungsschritt außerhalb der Druckmaschine gewonnen wurden. Wenn die Walze in der Druckmaschine montiert worden ist, kann sie folglich unmittelbar vor dem Druckbeginn auf der Grundlage der Einstelldaten eingestellt werden, so daß von Anfang an eine optimale Qualität des gedruckten Bildes erreicht wird und der Druckprozeß sofort und ohne Material- und Zeitverlust beginnen kann.

Die Topographiedaten liefern die nötige Information zur Berechnung der Einstelldaten für eine automatische Einstellung oder Anstellung der Walze in der Druckmaschine.

Zum Beispiel geben die Topographiedaten im Fall eines Druckzylinders die genaue Lage der Druckplatten relativ zu einer Referenzmarke an. Wenn die Referenzmarke detektiert wird, nachdem die Walze in der Druckmaschine montiert worden ist, kann man folglich einen Einstellwert für eine axiale Position der Walze in der Druckmaschine so bestimmen, daß diese axiale Position das korrekte Seitenregister ergibt. Ebenso ist es möglich, einen Einstellwert für eine Winkelvoreilung oder -nacheilung der Walze in Rotationsrichtung so zu bestimmen, daß die Voreilung oder Nacheilung das richtige Längsregister ergibt. Das gleiche gilt entsprechend für andere Typen von Walzen, die eine korrekte Einstellung des Längsregisters und/oder Seitenregisters erfordern. Wenn es für eine korrekte Einstellung des Druckzylinders nicht nötig ist, die gesamte Topographie des Druckzylinders zu kennen, so kann gemäß einer Variante der Erfindung der Abtastschritt durch einen Schritt ersetzt werden, in dem nur die räumliche Beziehung zwischen dem Druckmuster und der Referenzmarke bestimmt wird.

Andererseits erlaubt es z. B. im Fall eines Druckzylinders oder einer Rasterwalze für Flexodruck die Information über die geometrische Gestalt der Walzenoberfläche insgesamt, gegebenenfalls in Kombination mit dem Verhältnis zwischen den erhöhten (druckenden) und vertieften (nicht druckenden) Oberflächenbereichen, einen Einstellwert für den optimalen Druck abzuleiten, mit dem die Walze gegen ein damit zusammenwirkendes Bauteil der Druckmaschine angedrückt wird. Dieser Einstellwert kann z. B. als eine Kraft ausgedrückt werden, mit der die Walze gegen das damit zusammenwirkende Bauteil angedrückt wird, oder als ein Liniendruck (Kraft pro Längeneinheit des zwischen der Walze und dem damit zusammenwirkenden Bauteil gebildeten Spaltes) oder auch als eine Position der Drehachse der Walze längs einer vorbestimmten Achse, längs derer die Walze gegen das damit zusammenwirkende Bauteil angestellt oder von diesem abgerückt werden kann. Zum Beispiel erlauben es die Topographiedaten, zwei Werte, je einen für jedes Ende der Walze, für den (kleinsten) Radius der Walze zu bestimmen, und diese Werte können dann dazu benutzt werden, die optimalen Anstellpositionen zu bestimmen. Der optimale Einstellwert für die Kraft oder den Liniendruck wird naturgemäß von einer Vielzahl von Faktoren abhängen, etwa von den elastischen Eigenschaften der Oberfläche der Walze und des damit zusammenwirkenden Bauteils, der Zusammensetzung der Tinte, den Eigenschaften des Bedruckstoffes und dergleichen. Wenn der Einstellwert als eine Einstellposition angegeben ist, können auch Faktoren wie die Steifigkeit des Maschinengestells und der Lagerstruktur für die Walzen berücksichtigt werden. Für einen gegebenen Einbauort der Walze in der Druckmaschine kann der Einfluß dieser Faktoren auf den optimalen Einstellwert vorab in einer Kalibrierungsprozedur bestimmt werden, die zu einem Satz von Kalibrierungsdaten fürt, die dann zusammen mit den Topographiedaten einer spezifischen Walze dazu benutzt werden können, die optimalen Einstellungen für diese Walze zu bestimmen.

Nachdem die vorbereitenden Schritte einmal ausgeführt worden sind, die Walze in der Druckmaschine montiert worden ist und die Referenzmarke detektiert worden ist, können somit sofort die notwendigen Einstellungen vorgenommen werden, um eine optimale Druckqualität zu erreichen, ohne daß irgendwelche Prozeduren nach dem Prinzip von Versuch und Irrtum benötigt werden.

Aufgabe der Erfindung ist es, eine Abtastvorrichtung anzugeben, die für die Ausführung dieses Verfahrens geeignet ist.

Diese Aufgabe wird bei einer Abtastvorrichtung der eingangs genannten Art gelöst durch einen fest in einer dem Zylinder gegenüberliegenden Position in Abstand zum Umfang der Tastrolle angeordneten berührungslosen Abstandssensor (154) zur Messung der Position der Umfangsfläche der Tastrolle.

Die Abtastvorrichtung kann zweckmäßig in einen herkömmlichen Mounter integriert werden, der zum Montieren der Druckplatten benutzt wird. Unter diesem Gesichtspunkt hat die Erfindung auch einen Mounter zum Gegenstand, der dazu ausgebildet ist, einen Druckzylinder oder eine Druckzylinderhülse drehbar zu lagern, um Druckplatten auf dem Zylinder oder der Hülse anzubringen, wobei der Mounter weiterhin einen Detektor zum Detektieren einer Referenzmarke auf dem Druckzylinder oder der Druckzylinderhülse sowie ein Abtastsystem zum Vermessen der dreidimensionalen Gestalt der Oberfläche der Druckplatten oder Druckplatten auf dem Zylinder bzw. der Hülse aufweist.

Wenn der andererseits Prozeß der Abtastung der Umfangsfläche der Walze innerhalb der Druckmaschine ausgeführt wird (im Fall eines Druckzylinders mit oder ohne Erzeugung des Druckmusters), so kann andererseits dieser Prozeß auch dann fortgesetzt werden, wenn der Drucklauf begonnen hat, um die Feineinstellung der Walze zu verbessern und zu beschleunigen. Dieser Ansatz hat den besonderen Vorteil, daß es möglich ist, nicht nur die geometrische Gestalt der Walzenoberfläche und das darauf gebildete Druckmuster zu detektieren, sondern auch die genaue Position der Drehachse der Walze relativ zu anderen Komponenten der Druckmaschine, einschließlich anderer Walzen wie etwa eines zentralen Gegendruckzylinders (Zentralzylinder, im folgenden "CI" für Central Impression cylinder). Auf diese Weise können Fehler, die durch ein etwaiges Spiel in den Walzenlagerungen, aus der Steifigkeit des Maschinengestells und dergleichen resultieren, umgehend kompensiert werden. Dieses Konzept ist deshalb besonders leistungsfähig, weil, wenn der Abtastpmzeß bei laufender Druckmaschine ausgeführt oder fortgesetzt wird und somit die Lager und das Maschinengestell Kräften ausgesetzt sind, mit denen die verschiedenen Walzen gegeneinander angedrückt werden, ein etwaiger Verzug, der durch diese Kräfte verursacht wird, in Echtzeit detektiert und kompensiert werden kann. Dies gilt nicht nur für Druckzylinder, sondern auch für Rasterwalzen oder für Presseure beim Tiefdruck und dergleichen. Es ist sogar möglich, die Oberfläche des CI abzutasten, um die genaue Lage der Rotationsachse desselben zu detektieren.

Vorteilhafte Ausführungsformen der Erfindung werden nun anhand der Zeichnungen erläutert, in denen zeigen.
- Fig. 1: eine schematische Ansicht einer Rotationsdruckmaschine und ei- nes zugehörigen Vorbereitungsgestells;

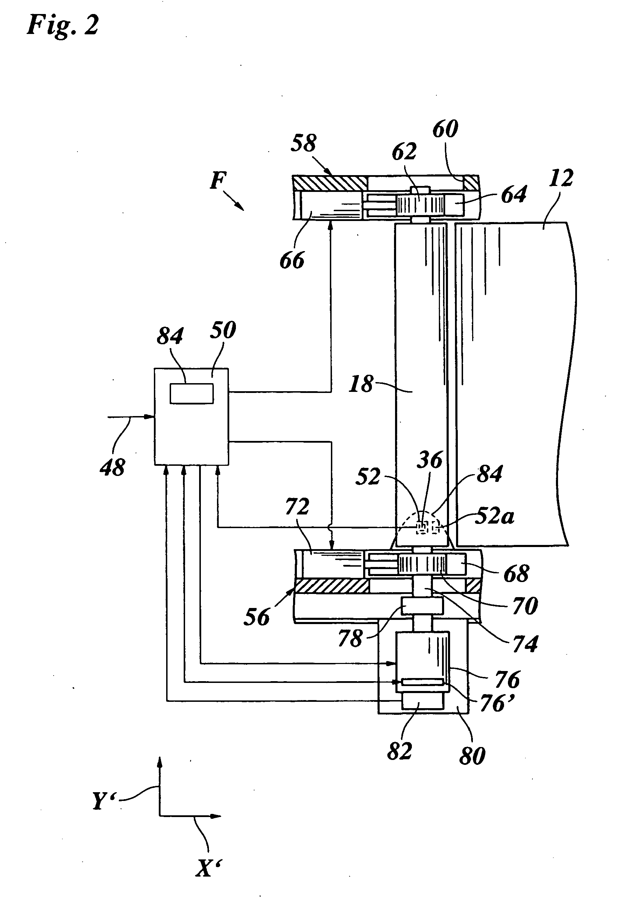

- Fig. 2: einen schematischen waagerechten Schnitt durch wesentliche Tei- le eines einzelnen Farbdecks in der Druckmaschine nach Fig. 1;

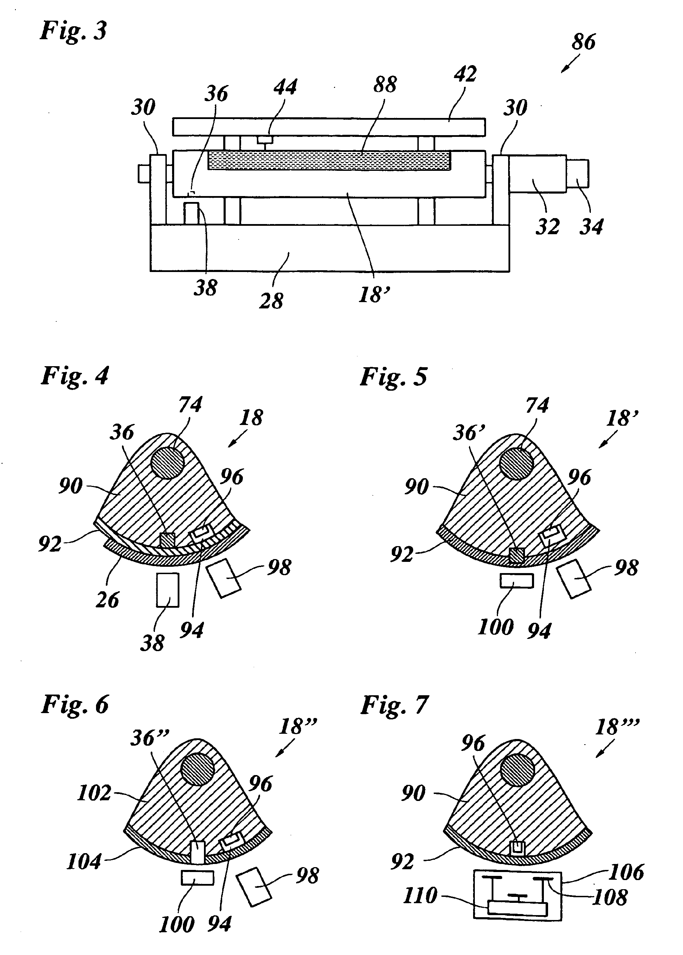

- Fig. 3: ein Vorbereitungsgestell gemäß einer modifizierten Ausführungs- form der Erfindung;
- Fig, 4 bis 7: Teil-Querschnitte von Druckzylindern;

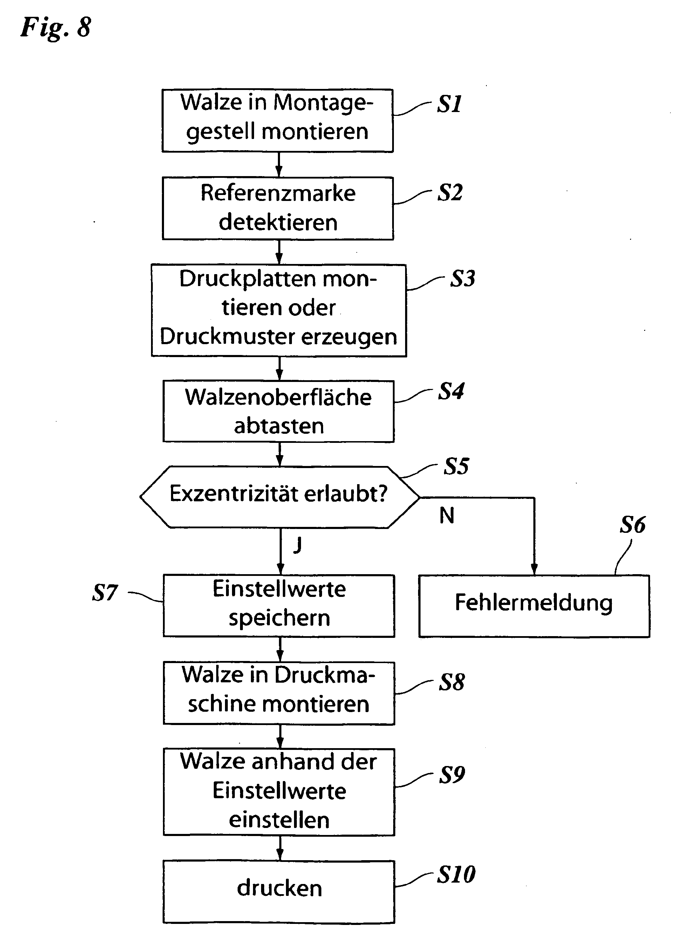

- Fig. 8: ein Blockdiagramm eines Verfahrens zur Einstellung einer Walze

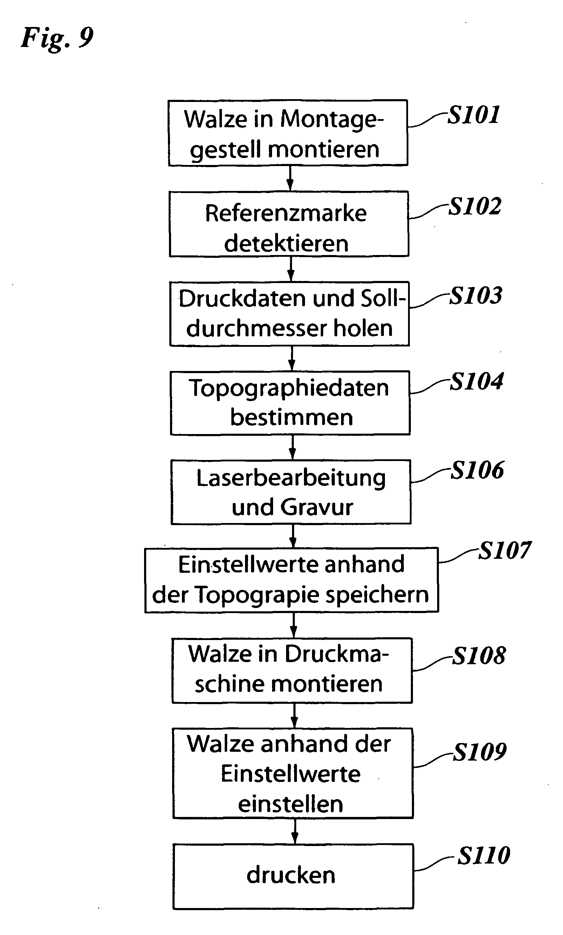

- Fig. 9: ein Blockdiagramm eines Verfahrens gemäß einer weiteren Aus- führungsform;

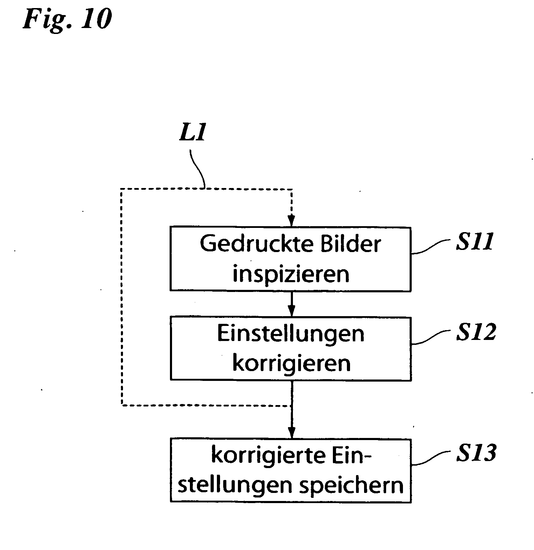

- Fig. 10: ein Blockdiagramm zusätzlicher Verfahrensschritte, die nach dem Beginn des Drucklaufes ausgeführt werden können;

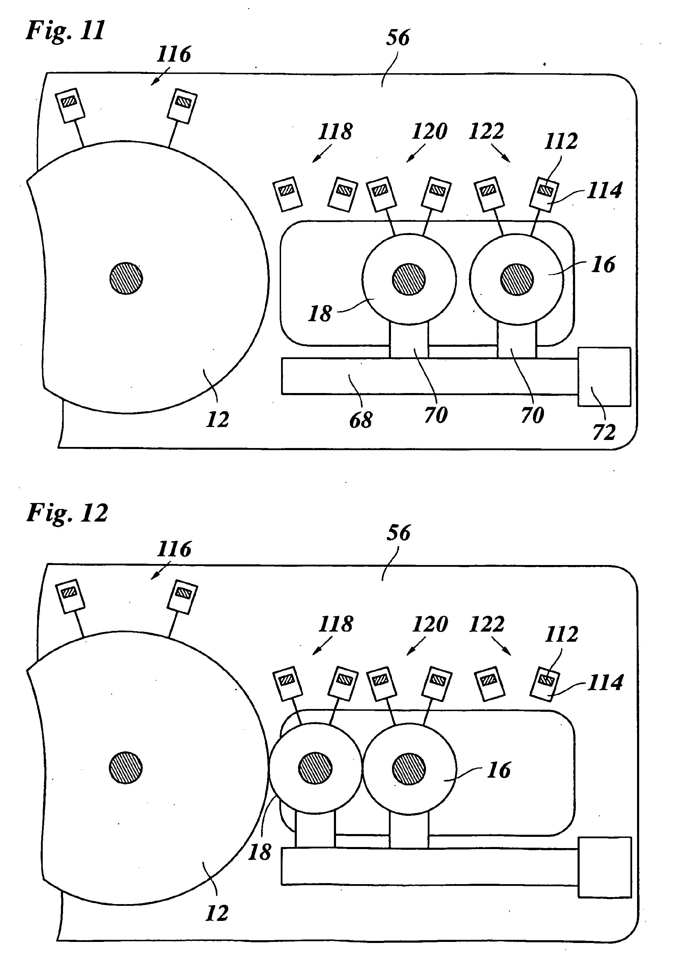

- Fig. 11 und 12: schematische Ansichten wesentlicher Teile einer Druckmaschine, die zur Ausführung eines Verfahrens gemäß noch einer weiteren Ausführungsform geeignet ist;

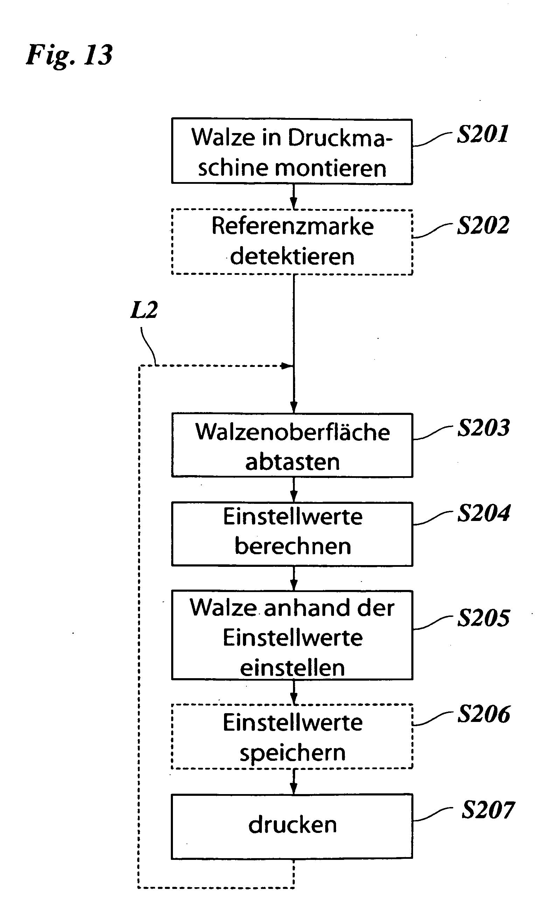

- Fig. 13: ein Blockdiagramm des Verfahrens, das mit der Druckmaschine nach Fig. 11 und 12 ausgeführt wird;

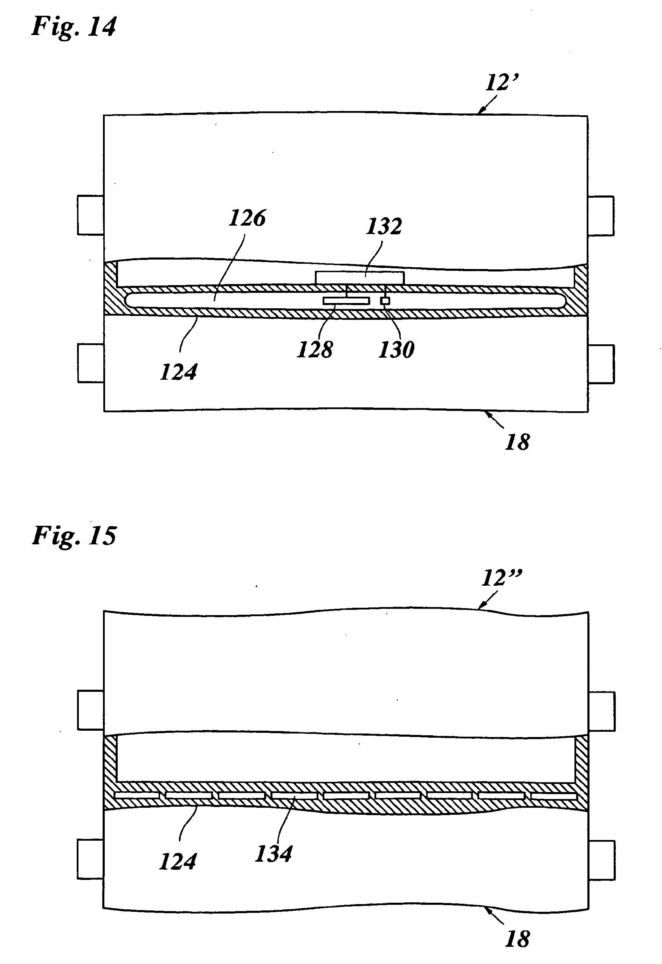

- Fig. 14: eine teilweise aufgeschnittene schematische Ansicht eines CI und eines Druckzylinders;
- Fig. 15: eine teilweise aufgeschnittene schematische Ansicht eines CI und eines Druckzylinders gemäß einer anderen Ausführungsform;

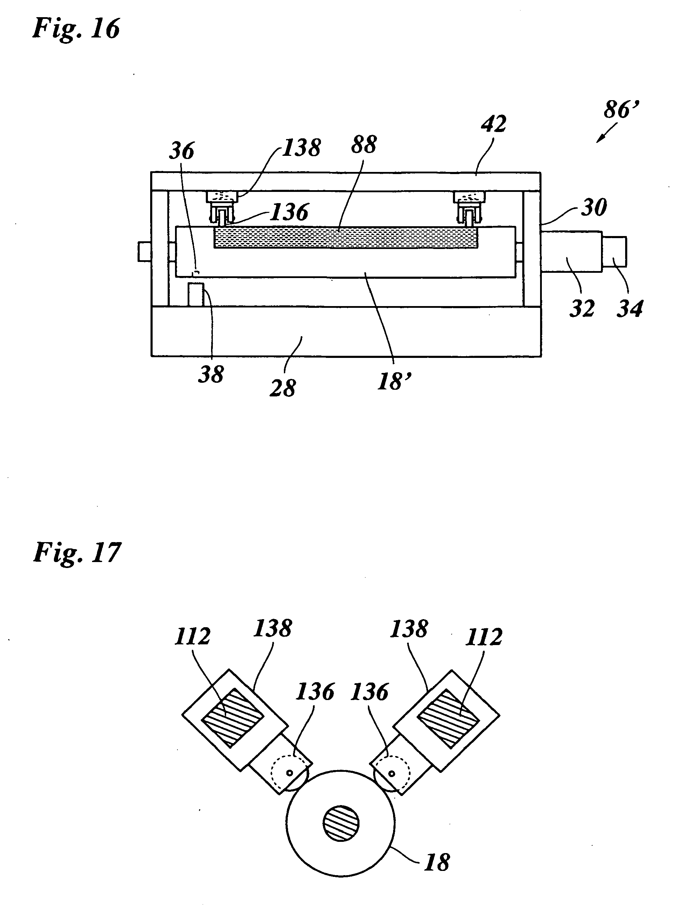

- Fig. 16: ein Vorbereitungsgestell gemäß einer Ausführungsform der Er- findung;
- Fig. 17: Teile einer Druckmaschine gemäß einer weiteren Ausführungs- form der Erfindung; und

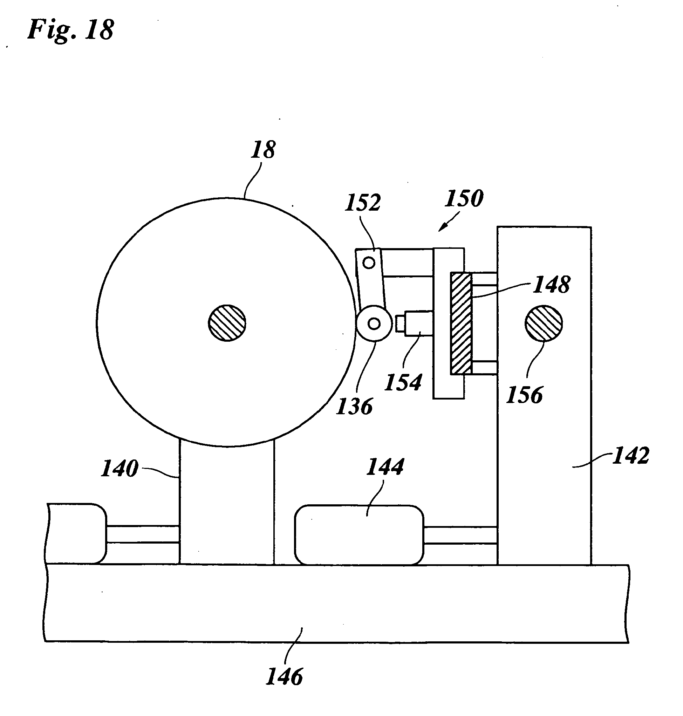

- Fig. 18: eine Prinzipskizze eines Abtastsystems gemäß der Erfindung.

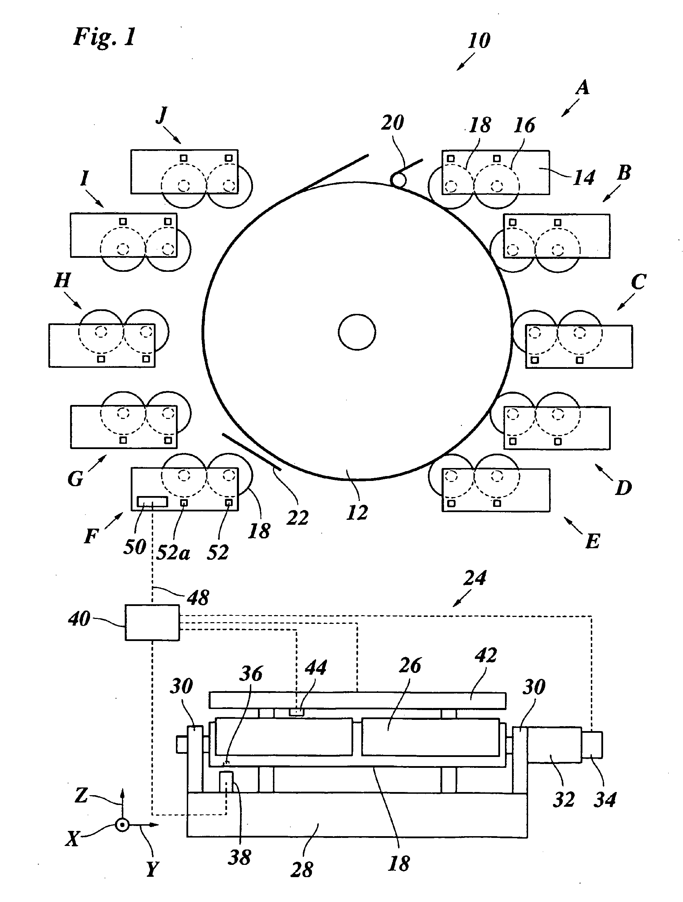

Als ein Beispiel für eine Druckmaschine, bei der Erfindung anwendbar ist, zeigt Fig. 1 eine bekannte Flexodruckmaschine mit einem zentralen Gegendruckzylinder (CI) 12 und zehn Farbdecks A-J, die um den Umfang des CI herum angeordnet sind. Jedes Farbdeck weist ein Gestell 14 auf, in dem eine Rasterwalze 16 und ein Druckzylinder 18 drebbar und einstellbar gelagert sind. Wie allgemein bekannt ist, wird die Rasterwalze mit Hilfe eines Einfärbungssystems und/oder einer Kammerrakel (nicht gezeigt) eingefärbt, und sie kann gegen den Druckzylinder 18 angestellt werden, so daß die Farbe auf die Umfangsfläche des Druckzylinders 18 übertragen wird, der ein Druckmuster trägt.

Eine Bahn 20 eines Bedruckstoffs läuft um den Umfang des CI 12 und bewegt sich somit an jedem der Farbdecks A-J vorbei, wenn der CI rotiert.

In Fig. 1 sind die Farbdecks A-E im aktiven Zustand gezeigt. In diesem Zustand werden die Rasterwalzen 16 und die Druckzylinder 18 so angetrieben, daß sie mit einer Umfangsgeschwindigkeit rotieren, die mit derjenigen des CI 12 identisch ist, und der Druckzylinder 18 ist gegen die Bahn 20 auf der Umfangsfläche des CI 12 angestellt, so daß ein Bild, das den jeweiligen Druckmustem entspricht, auf die Bahn 12 gedruckt wird. Jedes der Farbdecks A-E arbeitet mit einer bestimmten Farbe, so daß entsprechende Farbauszugsbilder eines gedruckten Bildes auf der Bahn 20 überlagert werden, wenn sie durch die Spalte zwischen dem CI 12 und den verschiedenen Druckzylindern 18 der aufeinanderfolgenden Farbdecks bindurchläuft. Es ist ein besonderer Vorteil einer Druckmaschine mit einer CI-Architektur, wie sie in Fig. 1 gezeigt ist, daß das Farbregister der von den verschiedenen Farbdecks erzeugten Farbauszugsbilder zuverlässig eingehalten werden kann, weil die Bahn stabil auf einem einzigen Element, nämlich dem CI 12 abgestützt ist.

## Patentansprüche

1. Abtastvorrichtung zur Messung eines Oberfläcbenprofils eines rotierenden Zylinders (18), mit einer beweglich gelagerten, am Zylinder abrollenden Tastrolle, **gekennzeichnet durch** einen fest in einer dem Zylinder (18) gegenüberliegenden Position in Abstand zum Umfang der Tastrolle angeordneten berührungslosen Abstandssensor (154) zur Messung der Position der Umfangsfläche der Tastrolle.

2. Abtastvorrichtung nach Anspruch 1, **dadurch gekennzeichnet, daß** die Tastrolle eine Umfangsfläche aus Metall aufweist und der Abstandssensor (154) ein Wirbelstromsensor ist.

3. Gestell für die Montage von Druckplatten (26) auf einem Druckzylinder (18) oder für die Erzeugung eines Druckmusters (88) auf der Oberfläche des Druckzylinders, welches Gestell dazu ausgebildet ist, den Druckzylinder (18) drehbar zu lagern, **gekennzeichnet durch** einen Detektor (38) zur Detektion einer Referenzmarke (36) auf dem Druckzylinder und eine Abtastvorrichtung (136, 138) nach Anspruch 1 oder 2 zum mechanischen Abtasten der Oberfläche des Druckzylinders (18), zur Detektion der Oberflächentopographie des Druckzylinders.

## Claims

1. Scanning device for measuring a surface profile of a rotating cylinder (18), comprising a calliper roller that is movably supported and rolls over the cylinder, **characterised by** a contactless distance sensor (154) that is disposed in spaced relationship to the periphery of the calliper roller in a fixed position opposite to the cylinder (18) for measuring the position of the peripheral surface of the calliper roller.

2. Scanning device according to claim 1, **characterised in that** the calliper roller has a peripheral surface made of metal, and the distance sensor (154) is an eddy current sensor.

3. Rack for mounting printing plates (26) on a printing cylinder (18) or for creating a printing pattern (88) on the surface of the printing cylinder, the rack being adapted for rotatably supporting the printing cylinder (18), **characterised by** a detector (38) for detecting a reference mark (36) on the printing cylinder, and by a scanning device (136, 138) according to claim 1 or 2 for mechanically scanning the surface of the printing cylinder (18) for detecting the surface topography thereof.

## Revendications

1. Dispositif de balayage pour mesurer un profil de surface d'un cylindre en rotation (18), comportant un rouleau palpeur roulant sur le cylindre et supporté de manière mobile, **caractérisé par** un capteur de distance sans contact (154) agencé dans une position opposée au cylindre (18), à distance de la périphérie du rouleau palpeur, pour mesurer la position de la surface périphérique du rouleau palpeur.

2. Dispositif de balayage selon la revendication 1, **caractérisé en ce que** le rouleau palpeur a une surface périphérique en métal et le capteur de distance (154) est un capteur à courant de Foucault.

3. Bâti pour le montage de plaques d'impression (26) sur un cylindre d'impression (18) ou pour la création d'un modèle d'impression (88) sur la surface du cylindre d'impression, lequel bâti est conçu pour supporter le cylindre d'impression (18) de manière rotative, **caractérisé en ce qu'**il comporte un détecteur (38) pour détecter un repère de référence (36) sur le cylindre d'impression, et un dispositif de balayage (136, 138) selon la revendication 1 ou 2 pour balayer mécaniquement la surface du cylindre d'impression (18) afin de détecter la topographie de surface du cylindre d'impression.
